# EUROPEAN PATENT APPLICATION

(11) **EP 4 826 638 A1**
(43) Date of publication of application: **21.10.2026**
(21) Application number: 26162831.7
(22) Date of filing: 06.03.2026
(51) Int. Cl.: G06T 3/047, G06T 5/80

(54) **IMAGE PROCESSING METHOD, IMAGE PROCESSING APPARATUS, IMAGE PROCESSING SYSTEM, AND PROGRAM**

(30) Priority: 14.04.2025 JP 2025066324
(71) Applicant: Canon Kabushiki Kaisha, Tokyo 146-8501 (JP)
(72) Inventor: ONO, Yukino, Ohta-ku, Tokyo, 146-8501 (JP); IDA, Yoshiaki, Ohta-ku, Tokyo, 146-8501 (JP); KUSUMI, Yuichi, Ohta-ku, Tokyo, 146-8501 (JP)
(74) Representative: TBK

(57) **Abstract**

An image processing method includes generating a second image based on a first image represented in a first coordinate system using a machine learning model, and converting the second image into a third image represented in a second coordinate system different from the first coordinate system.

## Description

### BACKGROUND

### Field of the Technology

The present disclosure relates to an image processing method, an image processing apparatus, an image processing system, and a program.

### Description of the Related Art

Y. Zhang et al., "Toward Real-world Panoramic Image Enhancement," 2020 IEEE/CVF Conference on Computer Vision and Pattern Recognition Workshops (CVPRW), 2020, pp. 2675-2684, discloses a method that transforms the coordinate of a fisheye image acquired using a fisheye lens into an equirectangular image, and then increases the resolution of (or transforms an image of) the equirectangular image using a machine learning model.

### SUMMARY

The present disclosure in its first aspect provides an image processing method as specified in claim 1. Optional features are specified in claims 2 to 14.

The present disclosure in its second aspect provides an image processing apparatus as specified in claim 15.

The present disclosure in its third aspect provides a program as specified in claim 16.

Features of the present disclosure will become apparent from the following description of embodiments with reference to the attached drawings. The following description of embodiments will be described by way of example.

### BRIEF DESCRIPTION OF THE DRAWINGS

Figs. 1A and 1B are explanatory diagrams relating to coordinate transformation.
Fig. 2 is a block diagram of an image processing system according to a first embodiment.
Fig. 3 is an external view of the image processing system according to the first embodiment.
Fig. 4 is a flowchart illustrating a method of generating training data according to the first embodiment and a second embodiment.
Fig. 5 is a flowchart illustrating training of weights of a machine learning model according to the first and second embodiments.
Fig. 6 is a flowchart illustrating generation of a third image according to the first and second embodiments.
Figs. 7A, 7B, 7C, and 7D are explanatory diagrams of coordinate systems according to the first and second embodiments.
Fig. 8 is a block diagram of an image processing system according to the second embodiment.
Fig. 9 is an external view of the image processing system according to the second embodiment.
Fig. 10 is a flowchart illustrating generation of a fifth image according to the second embodiment.

### DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

When the coordinate of a fisheye image is transformed into an equirectangular image, the degree of enlargement or reduction (scaling) due to the coordinate transformation differs between a horizontal direction and a vertical direction of the fisheye image. The scaling degree also varies depending on a position within the fisheye image. Due to variations in image quality degradation accompanying such scaling, in the method of Y. Zhang et al., "Toward Real-world Panoramic Image Enhancement," 2020 IEEE/CVF Conference on Computer Vision and Pattern Recognition Workshops (CVPRW), 2020, pp. 2675-2684, the machine learning model cannot distinguish a structure of an object in the fisheye image from image quality degradation caused by the coordinate transformation, and thus it is difficult to generate a high-resolution equirectangular image using the machine learning model. More specifically, in a case where an object in the fisheye image is composed of a gradation, it is not possible to distinguish whether the gradation originates from the inherent structure of the object or is caused by image quality degradation resulting from the coordinate transformation. Thereby, overcorrection or insufficient correction may occur in at least a part of a region of the equirectangular image generated by image transformation using the machine learning model.

Referring now to the accompanying drawings, a detailed description will be given of embodiments according to the present disclosure. Corresponding elements in respective figures will be designated by the same reference numerals, and a duplicate description thereof will be omitted. Each of the embodiments of the present invention described below can be implemented solely or as a combination of a plurality of the embodiments or features thereof where necessary or where the combination of elements or features from individual embodiments in a single embodiment is beneficial.

Before providing a detailed description of the embodiments, an overview and configuration of the present embodiment will be described. The present embodiment relates to an image processing method for generating a third image represented in a coordinate system different from that of a first image, based on the first image, coordinate transformation, and image transformation using a machine learning model. For example, based on a first image represented by an equidistant projection method, a third image represented by an equirectangular projection and having a higher resolution than the first image is generated.

In the present embodiment, first, based on a first image represented in a first coordinate system, a second image is generated using a machine learning model (first generation step). Next, by coordinate transformation, the second image is converted into a third image represented in a second coordinate system different from the first coordinate system (first transformation step). The present embodiment performs coordinate transformation after image transformation using the machine learning model, and generate the third image with high accuracy without being affected by nonuniform image quality degradation caused by coordinate transformation. In the present embodiment, the image may be a still image or a moving image.

In the present embodiment, a coordinate system uses a geometric representation method for arranging an object in a three-dimensional space on a two-dimensional plane, that is, an image, and specifying its position. The coordinate system uses, in addition to projection methods used in mathematics and physics, map projection methods used in geography. The coordinate system uses, for example, an equidistant projection method, an equisolid-angle projection method, an orthographic projection method, a stereographic projection method, a central projection method, an equirectangular projection, and an azimuthal equidistant projection.

In the present embodiment, coordinate transformation refers to intentionally rerepresenting an image represented in a predetermined coordinate system into a different coordinate system. For example, an image represented by an equidistant projection method is re-represented by an equirectangular projection in order to display the image on a head-mounted display (HMD). By coordinate transformation, an object in an image is spatially enlarged or reduced (scaled). Here, since the coordinate transformation is a two-dimensional transformation, scaling ratios can be set independently for a first direction and a second direction orthogonal to each other. The combination of the first direction and the second direction includes, for example, a combination of a horizontal direction and a vertical direction, or a combination of a radial direction and an azimuthal direction.

In the present embodiment, the scaling ratio indicates the degree to which an object in an image after coordinate transformation is enlarged or reduced relative to before the coordinate transformation. For example, in a case where an object in the image after coordinate transformation is represented by twice the number of pixels in the horizontal direction compared with before the coordinate transformation, the scaling ratio in the horizontal direction is 2. In a case where the object is represented by half the number of pixels in the horizontal direction, the scaling ratio in the horizontal direction is 1/2.

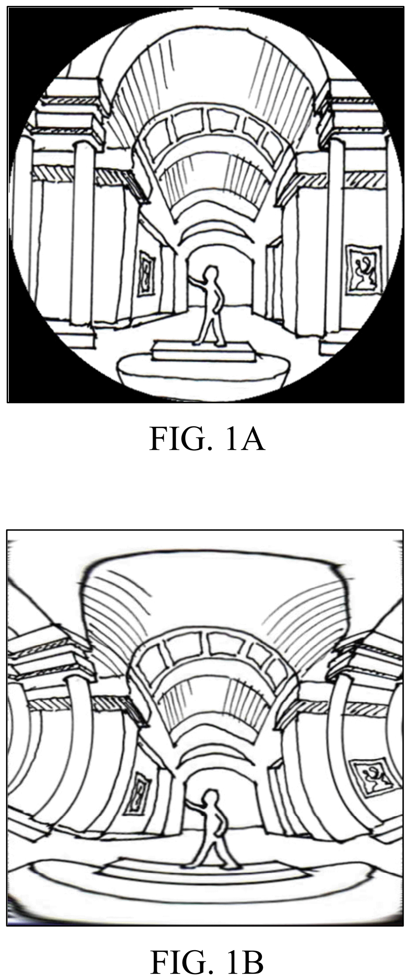

Before describing the effects of the present embodiment, characteristics of scaling and image quality degradation caused by coordinate transformation will be described. First, scaling caused by coordinate transformation will be described. An object in an image undergoes different scaling in the first direction and the second direction due to coordinate transformation. That is, the scaling ratio in the first direction differs from the scaling ratio in the second direction. In addition, the scaling ratio differs depending on the position at which the object is located. That is, scaling performed at a first position in the image differs from scaling performed at a second position different from the first position. Therefore, the scaling ratio has variations in the first direction depending on the position in the image, and has variations in the second direction different from those in the first direction. For example, coordinate transformation from an equidistant projection method to an equirectangular projection will be described. Figs. 1A and 1B are explanatory diagrams relating to coordinate transformation from the equidistant projection method to the equirectangular projection. Fig. 1B is an image obtained by performing coordinate transformation of Fig. 1A into the equirectangular projection, in a case where it is assumed that Fig. 1A illustrates an image represented by the equidistant projection method. As illustrated in Figs. 1A and 1B, an object at a center part of the image undergo almost no scaling in either the horizontal direction or the vertical direction, whereas objects in upper and lower portions of the image are significantly enlarged only in the horizontal direction. Therefore, the horizontal scaling ratio over the entire image has a wide range of variation different from that in the vertical direction. In this manner, scaling caused by coordinate transformation varies depending on image position and direction.

Next, image quality degradation caused by coordinate transformation will be described. Coordinate transformation involves nonuniform image quality degradation. Image quality degradation caused by coordinate transformation includes a reduction in resolution and the appearance of aliasing noise. The reduction in resolution is image quality degradation that occurs when sampling points in an image before coordinate transformation are enlarged by coordinate transformation. As sampling points are enlarged by coordinate transformation, the sampling pitch of the image relative to the sampling points becomes relatively smaller. Thereby, frequency components of the sampling points shift toward a lower frequency side relative to the Nyquist frequency of the image, thereby reducing resolution. On the other hand, the appearance of aliasing noise is image quality degradation that occurs when sampling points are reduced by coordinate transformation. As sampling points are reduced by coordinate transformation, the sampling pitch of the image relative to the sampling points becomes relatively larger. Thereby, frequency components of the sampling points shift toward a higher frequency side relative to the Nyquist frequency of the image. Thereby, since frequency components of the sampling points that exceed the Nyquist frequency of the image are folded back to the low-frequency side, aliasing noise occurs, which is a false structure not originally present in the sampling points. Thus, image quality degradation caused by coordinate transformation varies in type and degree depending on scaling. As described above, since scaling varies depending on image position and direction, image quality degradation also varies depending on image position and direction.

Based on the above, the effects of the present embodiment will be described in comparison with prior art. In the prior art, first, by coordinate transformation, a first image represented in a first coordinate system is converted into an image represented in a second coordinate system. Next, based on the image after coordinate transformation, a third image is generated using a machine learning model. That is, image transformation using a machine learning model is performed after coordinate transformation. However, as described above, image quality degradation caused by coordinate transformation varies depending on image position and direction. Therefore, in the prior art, the machine learning model cannot distinguish between structures of objects in the image and image quality degradation caused by coordinate transformation, and cannot generate the third image with high accuracy. For example, when an object in the image is composed of a gradation, it is not possible to distinguish whether the gradation is an inherent structure of the object or is caused by image quality degradation due to coordinate transformation. Thereby, overcorrection or insufficient correction occurs in at least a part of the third image, and the degree thereof varies depending on a direction.

In contrast, the present embodiment generates a second image based on the first image using a machine learning model, and then converts the second image into a third image represented in the second coordinate system by coordinate transformation. Thus, by performing coordinate transformation after image transformation using the machine learning model, image transformation using the machine learning model can be performed without being affected by image quality degradation caused by coordinate transformation, thereby enabling generation of the second image with high accuracy. Although coordinate transformation from the second image to the third image involves image quality degradation similar to that in the prior art, since the second image is generated with high accuracy, the third image can be generated with higher accuracy than in the prior art.

For example, consider a case in which, based on a first image represented by an equidistant projection method, a third image represented by an equirectangular projection and having a higher resolution than that of the first image is generated. As described above, due to coordinate transformation from the equidistant projection method to the equirectangular projection, objects in upper and lower parts of the image represented by the equidistant projection method are greatly enlarged only in the horizontal direction. Thus, image quality degrades significantly only in the horizontal direction. In prior art, a machine learning model performs image transformation on a second image that already includes image quality degradation in the horizontal direction caused by coordinate transformation. However, since the image quality degradation caused by coordinate transformation is not considered, such degradation cannot be corrected with high accuracy. As a result, in the upper and lower parts of the third image, image quality artifacts may occur in which objects in the image are stretched in the horizontal direction and connected in a linear manner. In contrast, according to the present embodiment, the machine learning model performs image transformation on the first image that does not include image quality degradation caused by coordinate transformation. Therefore, image quality artifacts that occur in the prior art do not occur in the generated second image. As a result, in the third image obtained by performing coordinate transformation on the second image, although image quality degradation caused by coordinate transformation occurs as described above, image quality artifacts do not occur. Thus, the present embodiment can generate the third image with high accuracy and without image quality artifacts compared with the prior art.

Next, cases in which the present embodiment achieves particularly higher effects than the prior art will be described. First, this includes a case in which, in coordinate transformation, a ratio of a scaling ratio in a certain direction at one part of the second image to a scaling ratio in the same direction at another part of the second image has a value of 2 or greater. Next, this includes a case in which, in coordinate transformation, in at least a part of the second image, a ratio of a scaling ratio in one of a first direction and a second direction to a scaling ratio in the other of the first direction and the second direction has a value of 2 or greater. In a case where at least one of these conditions is satisfied, in the prior art, it is particularly difficult to generate the third image with high accuracy due to variations in image quality degradation caused by coordinate transformation. On the other hand, in the present embodiment, as described above, the third image can be generated with high accuracy regardless of variations in image quality degradation caused by coordinate transformation.

An image may be generated using weight information based on the first image, the second image, and weight information on scaling in coordinate transformation applied to the second image, and the generated image may be subjected to coordinate transformation to generate the third image. The weight information is a weight used when calculating a weighted average of the first image and the second image, and is a weight for adjusting the effect of processing by the machine learning model. Thereby, compared with a case in which the second image is subjected to coordinate transformation to generate the third image, image quality degradation caused by coordinate transformation can be suppressed.

Next, a configuration of the present embodiment will be described. The image processing method of the present embodiment includes a first generation step and a first transformation step. In the first generation step, based on a first image represented in a first coordinate system, a second image is generated using a machine learning model. The first image may be a captured image captured using an optical system and an image sensor, or an image obtained based on a captured image. An image obtained based on a captured image includes, for example, an image obtained by enlarging a captured image in advance through interpolation processing using nearest neighbor interpolation, bilinear interpolation, bicubic interpolation, or the like. The interpolation processing does not cause nonuniform image quality degradation. The first image may be a stereoscopic image. A stereoscopic image is an image configured based on two images captured or generated from left and right viewpoints, and is capable of providing a stereoscopic effect using parallax between corresponding points in the left and right images.

In the present embodiment, the machine learning model may be configured by a neural network having two or more layers. For example, a convolutional neural network (CNN) or a generative adversarial network (GAN) may be employed. Alternatively, a recurrent neural network (RNN), a diffusion model, or the like may be employed. The machine learning model may also be genetic programming or a Bayesian network. The machine learning model may include at least one function of upscaling processing, deblurring processing, and noise reduction processing.

The second image may be generated by inputting the first image into the machine learning model. Alternatively, the second image may be generated by inputting into the machine learning model an image obtained by enlarging the first image in advance using interpolation processing or the like. The second image may have a higher resolution than that of the first image, and the number of pixels of the second image may not be the same as the number of pixels of the first image.

The machine learning model may be applied to a luminance component of the first image, and may not be applied to a chrominance component of the first image. The luminance component is a component representing brightness of an image, obtained by weighted addition of signals of a plurality of color channels, such as color filters disposed on a camera sensor, based on respective contributions of the color channels to human vision. For example, the luminance component of the second image may be generated by inputting the luminance component of the first image into the machine learning model, and the chrominance component of the second image may be generated by enlarging the chrominance component of the first image through interpolation processing. The second image may then be generated using the generated luminance component of the second image and chrominance component of the second image. Thereby, compared with a case in which the machine learning model is applied to both the luminance component and the chrominance component of the first image, the second image can be generated with reduced processing time. In addition, by not applying machine learning to the chrominance component of the first image, unnecessary color changes and artificial color correction can be avoided, consequently maintaining natural saturation and hue.

The first image may be a developed image. Development is performed on a raw image and includes processing such as demosaicing, noise reduction, and encoding. Thereby, compared with a case in which the first image is a raw image or an image in an intermediate stage of development processing, the machine learning model may be able to perform correction while considering effects of compression and noise reduction caused by development. The development in the present embodiment is not limited to this example. For example, an image obtained by performing at least one of demosaicing, noise reduction, and encoding on a raw image may be set to a developed image. The machine learning model may be trained using developed images. Thereby, robustness of the machine learning model to effects of compression and noise reduction caused by development can be improved.

The second image may include a first region and a second region, the first region may be generated using the machine learning model, and the second region may be generated using processing different from the machine learning model. The processing different from the machine learning model includes, for example, interpolation processing using a rule-based method. Thereby, compared with a case in which the entire second image is generated using only the machine learning model, the second image can be generated with reduced processing time.

A configuration that can be used in ca case where the first image is a captured image or an image based on a captured image. Objects rendered (drawn) in the first region may correspond one-to-one with objects rendered in a third region of the first image, and the third region may be included in an image circle corresponding to an optical system and an image sensor associated with the captured image. The one-to-one correspondence between objects in the first region and objects in the third region means that angles of view in object space of the first region and the third region are the same. In the present embodiment, the image circle is a circular range formed by an optical image projected through the optical system. On the other hand, since light does not reach outside the image circle, an image region corresponding to outside the image circle is a completely black region. Thus, in the second image, generating at least a region corresponding to the outside of the image circle using processing different from the machine learning model can achieve both high-accuracy generation of a significant region of an image using the machine learning model and reduction in processing time. This configuration is particularly effective in a case where a region corresponding to the outside of the image circle is large relative to the entire first image, for example, in a case where the first image is a captured image obtained using a full-circle fisheye lens. A full-circle fisheye lens is a fisheye lens in which an image circle is contained within a range of an image sensor.

A configuration applicable not only to a case in which the first image is a captured image or an image based on a captured image, but also to a case in which the first image is, for example, a computer graphics (CG) image, will be described. Objects rendered in the first region may correspond one-to-one with objects rendered in the third image. That is, in the second image, only a region that exists in the target third image may be generated using the machine learning model, and a region that does not exist in the third image may be generated using processing different from the machine learning model. For example, assume a case in which the first image is a captured image obtained using a fisheye lens and renders objects with an angle of view of 190° or less, whereas the target third image renders only objects with an angle of view of 180° or less. In this case, the second image may be generated by processing only a region of the first image corresponding to an angle of view of 180° or less using the machine learning model, and processing the remaining region using interpolation processing. This configuration can achieve both high-accuracy generation of significant regions of the second image using the machine learning model and reduction in processing time.

The first region may be generated based on a fourth region and at least a part of a fifth region. Here, objects rendered in the first region correspond one-to-one with objects rendered in the fourth region of the first image, and objects rendered in the second region correspond one-to-one with objects rendered in the fifth region of the first image. That is, when generating only a region of the second image that exists in the target third image using the machine learning model, in addition to a corresponding region of the first image, at least a part of a non-corresponding region may also be processed by the machine learning model. For example, in the above-described example, in addition to a region of the first image corresponding to an angle of view of 180° or less, a region corresponding to an angle of view greater than 180° and 190° or less may be processed by the machine learning model. Thereby, a region of the second image corresponding to an angle of view of 180° or less may be generated.

A reason of this configuration will be described. In a case where the first region of the second image is generated using the machine learning model based only on the fourth region of the first image, zero-padding processing may be used in order to draw the same object. Zero-padding processing is processing in which pixels having a pixel value of zero are added around a region to be processed. When the machine learning model processes a certain pixel, it may refer to surrounding pixels. However, for pixels at a peripheral portion of the fourth region, there are no pixels that can be referred to, and thus pixels having a pixel value of zero added by zero-padding processing are referred to. On the other hand, according to this configuration, for pixels at the peripheral portion of the fourth region, information on pixels in the fifth region having significant pixel values can be used. Thereby, a significant region (the first region) of the second image can be generated with higher accuracy. Zero-padding processing may still be performed in this configuration.

Next, the first transformation step converts the second image, using coordinate transformation, into a third image represented in a second coordinate system different from the first coordinate system. In a case where the first image is a captured image or an image based on a captured image, the first transformation step may include, in addition to coordinate transformation, at least one of distortion correction, correction of optical axis deviation, and image stabilization (shake correction) based on the first image. In the present embodiment, optical axis deviation refers to a positional deviation of an actual optical axis center from an ideal optical axis center assumed in simulation. In the present embodiment, shake refers to vibration of a camera or an optical system occurring during imaging (shooting). More specifically, based on information such as distortion, optical axis deviation, and shake in the captured image, these corrections may be executed simultaneously with coordinate transformation. Such information may be obtained, for example, from metadata attached to the captured image, or may be calculated based on information on an optical system used for imaging (shooting). A reason of this configuration will be described. In a case where further correction is performed on the third image, or correction is performed on the second image before coordinate transformation is performed, interpolation processing are performed twice.

In interpolation processing, in order to calculate a new pixel value for a specific pixel, a weighted average of pixel values of a plurality of pixels is calculated. Therefore, each time interpolation processing is executed, pixel values are averaged, high-frequency components are lost, and image quality degrades. In a case where correction is performed before or after coordinate transformation is performed, interpolation processing are performed twice. On the other hand, in the present configuration, which performs correction simultaneously with coordinate transformation in the first transformation step, when calculating a new pixel value for a specific pixel for both coordinate transformation and correction, a plurality of pixels to be referenced are collectively determined, and thus interpolation processing may be performed only once. Thereby, the present configuration can generate with high accuracy an image for which coordinate transformation, distortion, optical axis deviation, shake, and the like have been corrected. In addition, compared with a case in which these corrections are performed before the first generation step, details and fine deviations can be corrected in a high-resolution state, and therefore the third image can be generated with higher accuracy.

In a case where the first image is a captured image or an image based on a captured image and is a stereoscopic image, the first transformation step may include at least one of correction of parallax between a left-eye image and a right-eye image (parallax in the stereoscopic image), correction of optical axis deviation in a direction perpendicular to a direction of the parallax, and correction of tilt of an object. More specifically, based on information such as parallax, optical axis deviation in the vertical direction, and tilt on the image plane, these corrections may be executed simultaneously with coordinate transformation. Such information may be obtained, for example, from metadata attached to the captured image, or may be calculated based on information on an optical system used for imaging. A reason of this configuration may be the same as the reason of the first transformation step including distortion correction or optical axis deviation correction based on the first image in addition to coordinate transformation.

Irreversible compression processing may not be performed on the second image. That is, coordinate transformation may be performed on the second image generated using the machine learning model without performing irreversible compression processing. When irreversible compression processing is performed on an image, high-frequency components are highly likely to be lost. If the third image is generated by performing coordinate transformation after irreversible compression processing is performed on the second image, high-frequency components that are irrelevant to the final third image are unnecessarily lost due to irreversible compression processing, and furthermore, high-frequency components that are relevant to the third image are lost due to coordinate transformation. On the other hand, when irreversible compression processing is performed after coordinate transformation is performed on the second image, high-frequency components relevant to the third image are lost in both coordinate transformation and irreversible compression processing, and therefore loss of high-frequency components can be suppressed.

The image processing method according to the present embodiment may further include a decoding step of decoding first encoded data to generate the first image, and an encoding step of encoding the third image to generate second encoded data.

In the present embodiment, the order of coordinate transformation and image transformation using the machine learning model may be changed based on a coordinate system of a target image (the third image). More specifically, the third image may be generated by the following first or second processing, and selection processing. The first processing generates the third image using the first generation step and the first transformation step. The second processing includes a second transformation step and a second generation step. The second transformation step is a step of transforming the first image, by coordinate transformation, into a fourth image represented in the second coordinate system, and the second generation step is a step of generating the third image from the fourth image using the machine learning model. The selection processing is a step of selecting which of the first processing and the second processing is to be executed based on a relationship between the first and second coordinate systems.

Such a configuration may be used, for example, in a case where the machine learning model includes upscaling processing. As described above, in the second processing, which performs image transformation using the machine learning model after coordinate transformation, image transformation using the machine learning model is affected by image quality degradation caused by coordinate transformation. However, compared with the first processing, coordinate transformation can be performed on an image having a smaller number of pixels. Thereby, although image quality of the third image is inferior to that obtained by the first processing, processing time and memory consumption can be reduced. In the selection processing, for example, the first processing or the second processing may be selected based on variation in scaling ratios in coordinate transformation from the first coordinate system to the second coordinate system. The variation is the nonuniformity of the scaling ratio in the coordinate transformation. For example, in a case where the first coordinate system uses an equidistant projection method, the first processing may be selected in case where the second coordinate system uses an equirectangular projection, which has large variation, whereas the second processing may be selected when the second coordinate system uses an equisolid-angle projection, which has small variation.

### FIRST EMBODIMENT

In this embodiment, based on a first image that is captured using a fisheye lens and represented by an equidistant projection method, a high-resolution third image represented by an equirectangular projection is generated by coordinate transformation and image transformation using a machine learning model. In this embodiment, the machine learning model includes an upscaling function.

This embodiment inputs the generated third image into a head-mounted display (HMD) and displays and views it as a virtual reality (VR) image. The fisheye lens used in this embodiment adopts the equidistant projection method and captures a wide angle of view by significantly distorting peripheral portions of the image. Therefore, particularly in the peripheral portions of the image, it is difficult to sufficiently capture high-frequency components of objects. In addition, the coordinate of a fisheye image captured using the fisheye lens is transformed into an equirectangular image, and the resulting image is input to the HMD. In the HMD, a part of the image is displayed in a greatly enlarged manner in accordance with the user's line of sight. That is, during display, objects within the image are magnified, which may cause degradation in resolution sense. Due to such imaging and display characteristics, the resolution of the image may be improved through image processing. The configuration according to this embodiment performs coordinate transformation after image transformation using the machine learning model, generates a high-resolution third image with high accuracy.

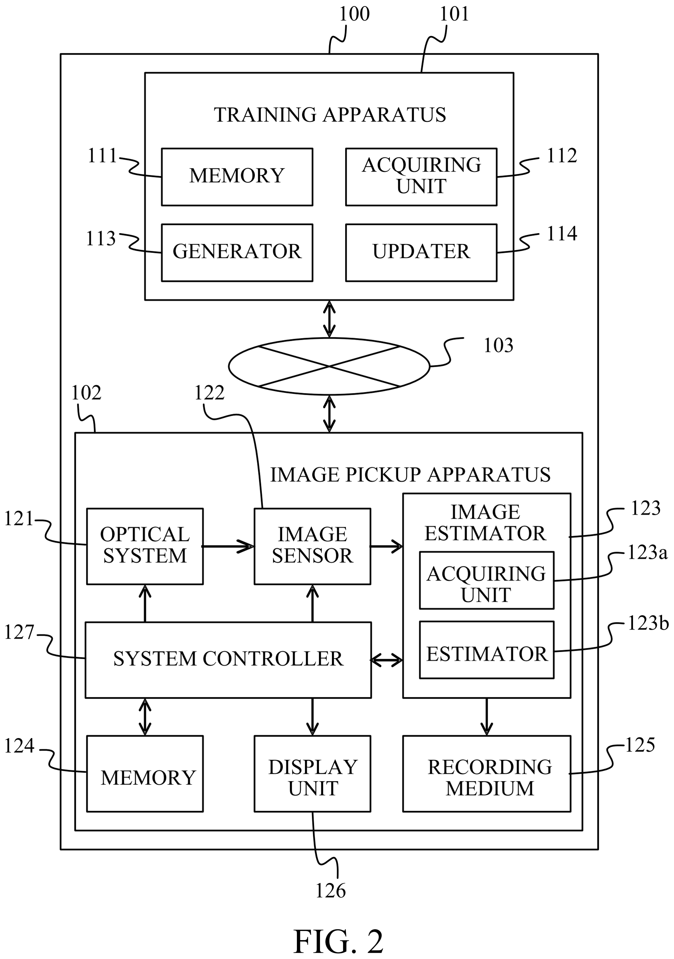

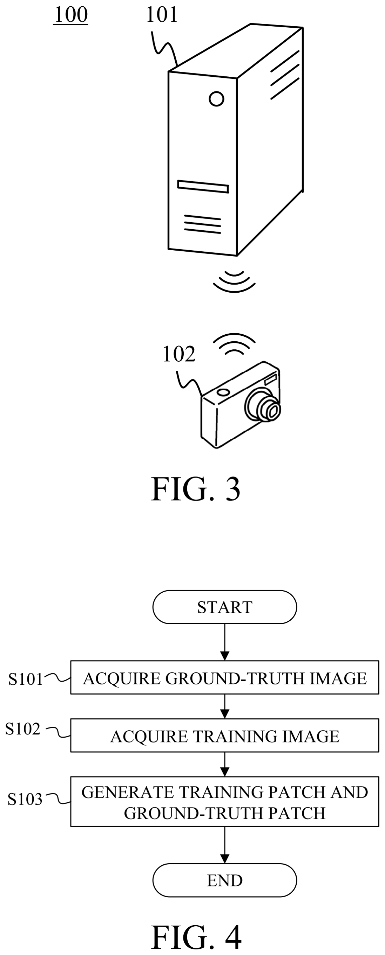

First, an image processing system according to this embodiment will be described. Fig. 2 is a block diagram of an image processing system 100 according to this embodiment. Fig. 3 is an external view of the image processing system 100. The image processing system 100 includes a training apparatus 101 and an image pickup apparatus 102. The training apparatus 101 and the image pickup apparatus 102 are connected to each other via a wired or wireless network 103.

The training apparatus 101 includes a memory 111, an acquiring unit 112, a generator 113, and an updater 114, and determines weights of a machine learning model.

The image pickup apparatus 102 includes an optical system 121, an image sensor 122, an image estimator (image processing apparatus) 123, a memory 124, a recording medium 125, a display unit 126, and a system controller 127. The optical system 121 condenses light incident from an object space and forms an object image. The optical system 121 may include functions such as zooming, aperture control, and autofocus (AF), as necessary. In this embodiment, the optical system 121 uses a fisheye lens and adopts the equidistant projection method. The image sensor 122 converts the object image formed by the optical system 121 into an electrical signal to generate a captured image. The image sensor 122 may be, for example, a Charge Coupled Device (CCD) sensor or a Complementary Metal-Oxide Semiconductor (CMOS) sensor.

The image estimator 123 inputs a first image into the machine learning model and generates a second image obtained by upscaling the first image. The first image is an image captured using the optical system 121 and the image sensor 122 and represented by the equidistant projection method. The image estimator 123 performs coordinate transformation to convert the second image into a third image represented by the equirectangular projection. The generation of the second image uses weights of the machine learning model that have been determined in advance by the training apparatus 101. The weights are stored in the memory 124. The recording medium 125 records the third image. In a case where an instruction to output the third image is given by a user, the display unit 126 displays the third image. The above operations are controlled by the system controller 127.

In this embodiment, after generating training data for the machine learning model, the weights of the machine learning model are updated. Thereafter, estimation using the machine learning model with the trained weights and coordinate transformation are performed.

First, generation of training data will be described. Fig. 4 is a flowchart illustrating a method of generating training data. The training data consists of pairs of training patches and ground-truth patches and is used for training the machine learning model. In a training phase, by inputting a training patch into the machine learning model, an output patch is obtained, and the weights of the machine learning model are determined such that a difference between the output patch and the ground-truth patch is reduced. The training patches and the ground-truth patches are generated from acquired training images and ground-truth images, respectively. Each step illustrated in Fig. 4 is executed by the acquiring unit 112 or the generator 113. In this embodiment, the training data is generated by the training apparatus 101, but may be generated by another apparatus.

In step S101, the acquiring unit 112 acquires ground-truth images from the memory 111. The ground-truth images include a plurality of images and may be captured images or CG images. The ground-truth images may include sufficiently high-frequency components in order to determine weights of the machine learning model for estimating images with high resolution sense. For example, in a case where the ground-truth images are captured images, they may be images captured using an optical system having higher performance than that of the optical system 121, or images obtained by downscaling such captured images. In order to improve robustness of the machine learning model for objects in the first image, the ground-truth images may include images having various object structures, such as structures including edges, textures, gradations, and flat regions with various intensities and directions.

In step S102, the acquiring unit 112 acquires training images from the memory 111. The training images include a plurality of images and may be captured images or CG images. In this embodiment, the number of pixels of each training image is smaller than that of each ground-truth image, and a ratio of the number of pixels of the ground-truth image to that of the training image is equal to a ratio of the number of pixels of the second image to that of the first image. The training images include the same objects as the ground-truth images and have a larger sampling pitch than the ground-truth images. The training images may include image quality degradation with an intensity similar to that of the first image. Image quality degradation includes, for example, jaggies in contours or edges, spatial aliasing, compression artifacts, and noise. Thereby, robustness of the machine learning model with respect to image quality degradation included in the first image can be improved.

The training images may be generated using the ground-truth images. For example, training images may be generated by downscaling the ground-truth images and adding image quality degradation corresponding to that of the first image. The ground-truth images and the training images may be generated using images different from each other.

The ground-truth images and the training images may be generated using images captured by the optical system 121 and the image sensor 122. For example, captured images may be used as the training images. The ground-truth images may be obtained by capturing the same objects as those of the training images using an image sensor having a smaller sampling pitch than the image sensor 122. The ground-truth images may be captured using an optical system having fewer aberrations than the optical system 121. Thereby, since the ground-truth images become higher-resolution images, the second image can be generated with higher accuracy in an estimation phase.

In step S103, the generator 113 generates training patches and ground-truth patches, respectively. Each patch is an image having a predetermined number of pixels (for example, 64 × 64 pixels). In this embodiment, the number of pixels of each training patch is smaller than that of each ground-truth patch, and a ratio of the number of pixels of the ground-truth patch to that of the training patch is equal to a ratio of the number of pixels of the second image to that of the first image. Images having a predetermined number of pixels are extracted from regions illustrating the same objects in the training images and the ground-truth images to generate the training patches and the ground-truth patches, respectively. That is, each training patch includes the same object as that of a corresponding ground-truth patch and has a larger sampling pitch than that of the ground-truth patch. The training patches and the ground-truth patches are extracted from a plurality of regions of the training images and the ground-truth images, respectively. In this embodiment, training patches and ground-truth patches are generated by extracting patches from the training images and the ground-truth images; however, if the number of pixels of the training images and the ground-truth images is equal to the predetermined number of pixels of the patches, patch extraction processing can be omitted.

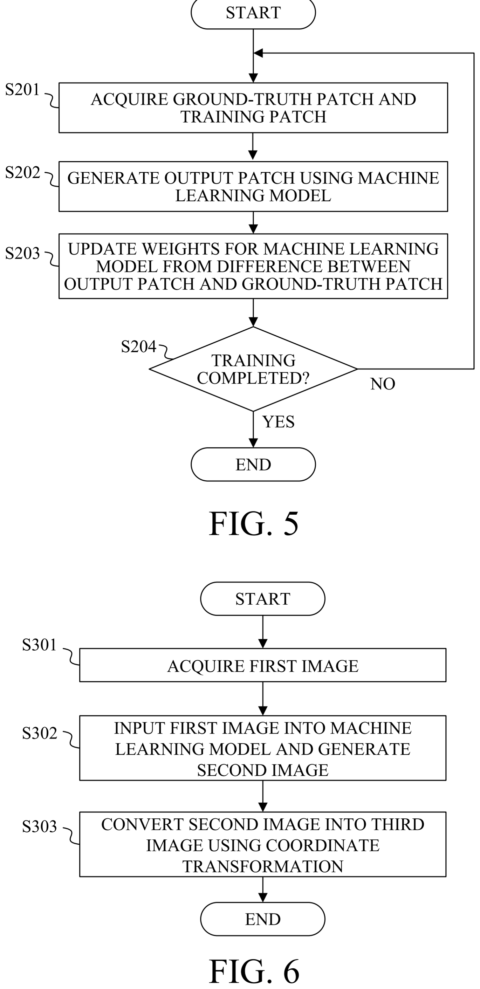

Next, updating of the weights of the machine learning model (training phase) performed in the training apparatus 101 will be described. Fig. 5 is a flowchart illustrating updating of the weights of the machine learning model. Each step illustrated in Fig. 5 is executed by the acquiring unit 112, the generator 113, or the updater 114.

In step S201, the acquiring unit 112 acquires one or more pairs of training patches and ground-truth patches from the memory 111.

In step S202, the generator 113 inputs the training patches into the machine learning model and generates output patches. In this embodiment, the machine learning model is a CNN having a plurality of convolutional layers. In an initial stage of training, weights of the convolutional layers (filter coefficients and biases) are generated using random numbers.

In step S203, the updater 114 updates the weights of the machine learning model based on differences between the output patches and the ground-truth patches. In this embodiment, a loss function is a weighted sum of pixel loss and perceptual loss. The pixel loss is a Euclidean norm of differences in pixel values between the output patches and the ground-truth patches. The perceptual loss is a value obtained by inputting the output patches and the ground-truth patches into a pre-trained convolutional neural network such as a VGG network and calculating a Euclidean norm of differences between feature maps of intermediate layers. However, the loss function is not limited to this example. In a case where a plurality of pairs of training patches are input in step S201, a value of the loss function is calculated for each pair. Based on the calculated values of the loss function, the weights are updated using backpropagation or the like.

In step S204, the updater 114 determines whether training of the machine learning model has been completed. Completion of training can be determined based on whether the number of iterations of weight updates has reached a predetermined number or whether a change amount in weights during updates is smaller than a predetermined value. In a case where it is determined in step S204 that training has not been completed, the flow returns to step S201, and the acquiring unit 112 acquires one or more new pairs of training patches and ground-truth patches. On the other hand, in a case where it is determined that training has been completed, the updater 114 ends the training and stores weight information in the memory 111.

In a case where the first image is a moving image, the ground-truth images and the training images may be generated from a plurality of moving images. At the same time, in step S202, when the machine learning model generates output patches from training patches, another training patch temporally adjacent to the training patch may also be used. Thereby, when generating a second image (moving image) by processing a specific frame of the first image (moving image), information about objects that are not present in that frame may be complemented using temporally adjacent frames, thereby obtaining an effect of pixel-shift super-resolution. For example, in a case where an object is sampled with a half-pixel shift in an adjacent frame, double high-frequency information about the object can be obtained. Thereby, image quality of the second image (moving image) generated by inputting the first image into the machine learning model may be improved.

Finally, estimation using the machine learning model with trained weights and coordinate transformation (estimation phase) performed in the image pickup apparatus 102 will be described. Fig. 6 is a flowchart illustrating generation of the third image. The estimation phase of this embodiment first inputs the first image represented by the equidistant projection method into the machine learning model to generate the second image obtained by upscaling the first image. Next, coordinate transformation is performed to convert the second image into the third image represented by the equirectangular projection. Each step illustrated in Fig. 6 is executed by an acquiring unit 123a or an estimator (generator, transformation unit) 123b in the image estimator 123.

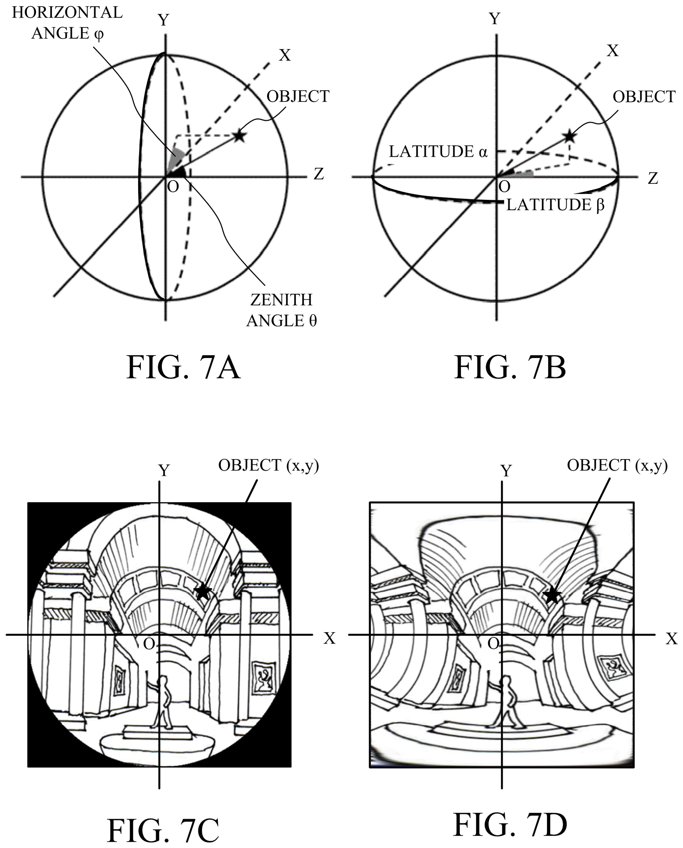

In step S301, the acquiring unit 123a acquires the first image. In this embodiment, the first image is an image captured using the optical system 121 and the image sensor 122 and represented by the equidistant projection method. The optical system 121 uses a fisheye lens and adopts the equidistant projection method. The equidistant projection method will be described with reference to Figs. 7A and 7C. Fig. 7A is an explanatory diagram illustrating parameters relating to the equidistant projection method in a three-dimensional space. Fig. 7C is an explanatory diagram illustrating an example in which an object is disposed on an image plane using the equidistant projection method. The example of an image represented by the equidistant projection method illustrated in Fig. 7C differs in distortion from an image actually obtained by a real optical system adopting the equidistant projection method, when the actual shape of the object is taken into consideration. The equidistant projection method is a projection method in which an object in a three-dimensional space is disposed on an image at a distance proportional to a zenith angle θ at a reference point O on the image. In Figs. 7A and 7C, the image plane is an XY plane, and pixel arrangement directions of the image are a horizontal direction (X-axis) and a vertical direction (Y-axis), respectively. At this time, an object in a three-dimensional space is disposed on the image by the optical system 121 adopting the equidistant projection method in accordance with the following equations (1) and (2): $x = f \times θ \times cosφ$ (1) $y = f \times θ \times sinφ$ (2)

In equations (1) and (2), let x be a coordinate in the horizontal direction and let y be a coordinate in the vertical direction with respect to the reference point O (optical axis center) as a center on the image. Further, let f be a focal length of the optical system 121, let θ be an angle (zenith angle) of the object from the optical axis, and let φ be a horizontal angle of the object from the reference point O. In this embodiment, the zenith angle θ represents an angle between a Z-axis (optical axis) and a straight line extending from the reference point O (optical axis center) toward the object. In this embodiment, the horizontal angle φ represents an angle between the X-axis and a straight line obtained by projecting, onto the image plane (XY plane), a straight line extending from the reference point O toward the object. The first image may be represented in grayscale or may have a plurality of channel components. The first image may be a part of an entire captured image. Further, weight information is read from the memory 111 in advance and stored in the memory 124.

In step S302, the estimator 123b inputs the first image into the machine learning model and generates the second image. The second image is an image obtained by upscaling the first image with high accuracy and is represented by the equidistant projection method.

In step S303, the estimator 123b performs coordinate transformation to convert the second image into the third image represented by the equirectangular projection. The equirectangular projection will be described with reference to Figs. 7B and 7D. Fig. 7B is an explanatory diagram illustrating parameters relating to the equirectangular projection in a three-dimensional space. Fig. 7D is an explanatory diagram illustrating an example in which an object is disposed on an image plane using the equirectangular projection. Fig. 7D represents an image obtained by transforming the coordinate of Fig. 7C into the equirectangular projection, in a case where it is assumed that Fig. 7C is an image represented by the equidistant projection method. The equirectangular projection is a map projection method in which an object on a three-dimensional sphere is disposed on an image at a vertical distance proportional to latitude α and a horizontal distance proportional to longitude β. In Figs. 7B and 7D, similarly to Figs. 7A and 7C, the image plane is an XY plane, and pixel arrangement directions of the image are a horizontal direction (X-axis) and a vertical direction (Y-axis), respectively. When the equirectangular projection is used, an object on a three-dimensional sphere is disposed on the image in accordance with the following equations (3) and (4): $x = R \times β$ (3) $y = R \times α$ (4)

In equations (3) and (4), x represents a horizontal coordinate and y represents a vertical coordinate with respect to a reference point O as a center on the image, and R represents a radius of a sphere on which the object exists. In this embodiment, the latitude α represents an angle between an equatorial plane (XZ plane) and a straight line extending from the reference point O toward the object. The longitude β represents an angle between the Z-axis and a straight line obtained by projecting, onto the equatorial plane (XZ plane), a straight line extending from the reference point O toward the object.

For coordinate transformation, first, based on a relationship between the equidistant projection method, which is a coordinate system of the second image, and the equirectangular projection, which is a coordinate system of the third image, a relationship between each pixel of the second image and each pixel of the third image is calculated. That is, pixels of the second image corresponding to each pixel of the third image are calculated. One or more pixels of the second image may correspond to one pixel of the third image. In a case where the center of the second image does not coincide with the center of the third image to be generated, a shift amount between the centers may be considered. Further, a value of R in equations (3) and (4) may be adjusted in accordance with the number of pixels of the third image to be generated. Next, a pixel value of the third image is calculated from pixel values of the second image using an interpolation method such as nearest neighbor interpolation, bilinear interpolation, or bicubic interpolation.

Effects of this embodiment will be described below. In the following description, a case is assumed in which the number of pixels of the second image before coordinate transformation is equal to the number of pixels of the third image after coordinate transformation. In coordinate transformation from the equidistant projection method to the equirectangular projection, as described with reference to Figs. 1A and 1B, objects at a central portion of the image undergo almost no scaling in either a horizontal direction or a vertical direction. On the other hand, in upper and lower portions of the image, objects are significantly enlarged only in the horizontal direction. Depending on a position in the image, a horizontal scaling ratio has a variation of approximately from 1 to infinity, whereas a vertical scaling ratio has a variation of approximately from 0.6 to 1. Therefore, when image transformation using a machine learning model is performed after coordinate transformation in accordance with prior art, the third image is highly likely to be excessively corrected or insufficiently corrected, particularly in the horizontal direction, due to variations in image quality degradation associated with horizontal scaling. On the other hand, according to the configuration according to this embodiment, the third image can be generated with high accuracy regardless of image quality degradation caused by coordinate transformation.

As described above, based on a first image represented by the equidistant projection method, the configuration of this embodiment can generate a high-resolution third image represented by the equirectangular projection using coordinate transformation and image transformation using a machine learning model.

### SECOND EMBODIMENT

Based on a first image captured using an optical system that employs a central projection method, the present embodiment generates a third image represented in an equirectangular projection and having high resolution using coordinate transformation and image transformation with a machine learning model. In the present embodiment, the machine learning model has a deblurring function. The blur in the present embodiment is blur caused by diffraction, and no variation in blur is present.

Similarly to the first embodiment, the present embodiment is intended to input the generated third image to an HMD and display and view the image as a VR image. In the present embodiment, the first image is an image represented by a central projection method, and the third image represented by an equirectangular projection is generated based on the first image. This processing is performed for a plurality of first images, and the generated plurality of third images are combined. Thereby, a single equirectangular image to be input to the HMD is generated. In the first embodiment, the first image is an image represented by an equidistant projection method, which can represent a wide angle of view with a single image, while the peripheral portion of the image has low resolution due to distortion. On the other hand, an image represented by a central projection method does not have extreme distortion in the peripheral portion, and thus the present embodiment can acquire a third image having higher resolution than that of the first embodiment. Since a plurality of third images are generated in order to obtain an equirectangular image to be input to the HMD, multiple imaging operations, multiple executions of the machine learning model, and combining processing are performed. On the other hand, as described in the first embodiment, in the HMD, a part of the third image is greatly enlarged and displayed in accordance with the user's line of sight. Therefore, also in the present embodiment, the resolution of the image is increased by image processing. The present embodiment can generate a high-resolution third image with high accuracy by performing coordinate transformation after image transformation using the machine learning model.

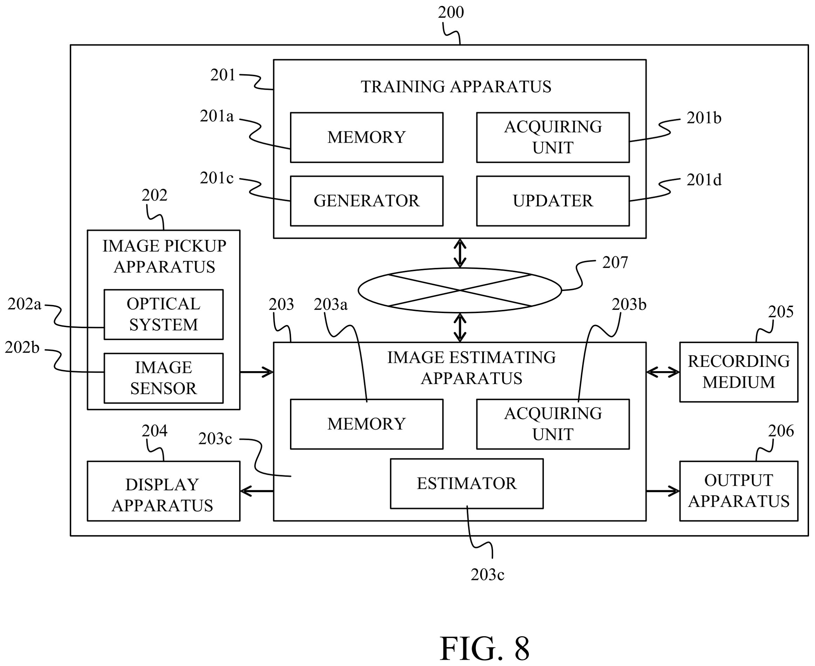

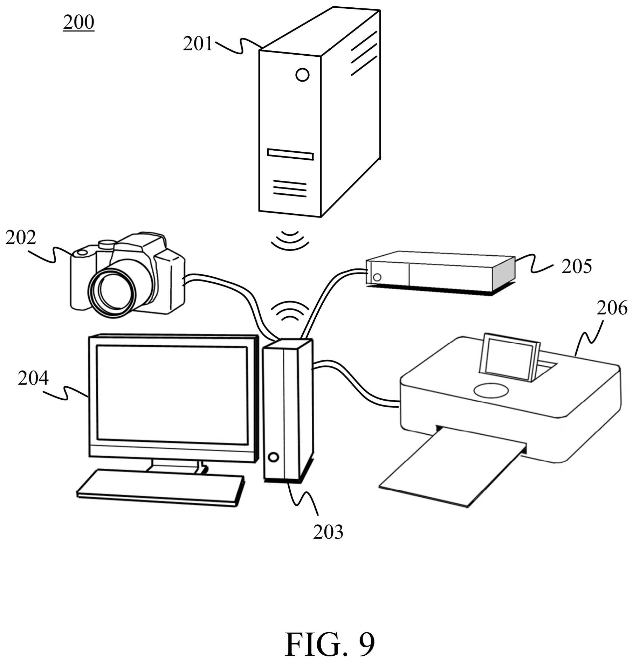

First, an image processing system 200 according to the present embodiment will be described. Fig. 8 illustrates a block diagram of the image processing system 200 according to the present embodiment. Fig. 9 illustrates an external view of the image processing system 200. The image processing system 200 includes a training apparatus 201, an image pickup apparatus 202, an image estimating apparatus (image processing apparatus) 203, a display apparatus 204, a memory 205, and an output apparatus 206. The training apparatus 201 and the image estimating apparatus 203 are connected to each other via a wired or wireless network 207.

The training apparatus 201 includes a memory 201a, an acquiring unit 201b, a generator 201c, and an updater 201d, and determines weights of a machine learning model.

The image pickup apparatus 202 includes an optical system 202a and an image sensor 202b. The optical system 202a condenses light incident from an object space and forms an object image. In the present embodiment, the optical system 202a employs a central projection method. The image sensor 202b converts the object image formed by the optical system 202a into an electrical signal to generate a captured image.

The image estimating apparatus 203 includes a memory 203a, an acquiring unit 203b, and an estimator 203c. The image estimating apparatus 203 inputs a first image to the machine learning model and generates a second image obtained by deblurring the first image. The first image includes a plurality of images captured using an optical system 221 and an image sensor 222 and represented by a central projection method. The image estimating apparatus 203 converts the second image into a third image represented by an equirectangular projection by coordinate transformation and combining processing. The generation of the second image uses weights determined in advance by the training apparatus 201. Therefore, the memory 203a stores the weights. The third image is output to at least one of the display apparatus 204, the memory 205, and the output apparatus 206. The display apparatus 204 is, for example, a liquid crystal display or a projector. A user can perform editing work while checking images in the middle of processing via the display apparatus 204. The memory 205 is, for example, a semiconductor memory, a hard disk, or a server on a network, and stores the third image. The output apparatus 206 includes, for example, a printer.

In the present embodiment, similarly to the first embodiment, after generating training data for the machine learning model, training of weights of the machine learning model is performed. Thereafter, estimation using the machine learning model with the trained weights and coordinate transformation are performed.

The image processing system 200 may further include a control apparatus (first apparatus) that makes a request relating to the first image to the image estimating apparatus 203. In this case, the control apparatus includes a transmitter that transmits, to the image estimating apparatus 203, a request for causing the image estimating apparatus 203 to execute processing on the first image. The image estimating apparatus (second apparatus) 203 includes a receiver that receives the request from the control apparatus.

Next, with reference to Fig. 4, generation of training data for the machine learning model performed in the training apparatus 201 will be described. The step for generating training data in the present embodiment is similar to the generating step in the first embodiment and includes steps S101 to S103. However, in each step of Fig. 4, processing performed by the acquiring unit 112 or the generator 113 in the first embodiment is performed by the acquiring unit 201b or the generator 201c, respectively, in the present embodiment. In the present embodiment, the training image and the ground-truth image have the same number of pixels, and the training patch and the ground-truth patch also have the same number of pixels. In the present embodiment, the training image is an image including blur having substantially the same intensity as that of the first image. Thereby, the machine learning model can have a function of correcting blur included in the first image.

Next, with reference to Fig. 5, training of weights of the machine learning model (first learning phase) performed in the training apparatus 201 will be described. The step for training weights of the machine learning model in the present embodiment is similar to the training step in the first embodiment and includes steps S201 to S204. However, in each step of Fig. 5, processing performed by the acquiring unit 112, the generator 113, or the updater 114 in the first embodiment is performed by the acquiring unit 201b, the generator 201c, or the updater 201d, respectively, in the present embodiment.

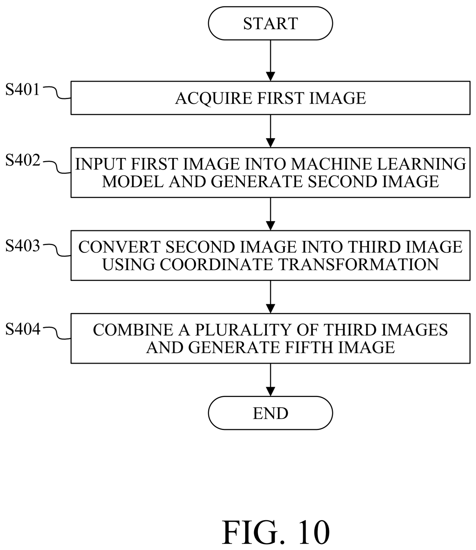

Finally, estimation using the machine learning model with learned weights and coordinate transformation (estimation phase) performed in the image estimating apparatus 203 will be described. Fig. 10 illustrates a flowchart illustrating generation of a fifth image. The first image includes a plurality of images represented by a central projection method. In the estimation phase of the present embodiment, first, the first image is input to the machine learning model to generate a second image in which blur in the first image is removed. Next, the second image is subjected to coordinate transformation to be converted into a third image represented by an equirectangular projection. This processing is performed for a plurality of first images, and finally, the generated plurality of third images are combined to generate one equirectangular image (fifth image). Each step in Fig. 10 is performed by the acquiring unit 203b or the estimator 203c of the image estimating apparatus 203.

In step S401, the acquiring unit 203b acquires a first image. In the present embodiment, the first image includes a plurality of images captured by the optical system 202a and the image sensor 202b and represented by a central projection method. The optical system 202a employs a central projection method. The central projection method will be described with reference to Fig. 7A. Fig. 7A illustrates parameters relating to the central projection method in a three-dimensional space. In the central projection method, an object in a three-dimensional space is disposed such that the larger a zenith angle θ from a reference point O on an image is, the larger the object appears on the image. At this time, in accordance with the following equations (5) and (6), the object in the three-dimensional space is disposed on the image by the optical system 202a employing the central projection method. $x = f \times tan θ \times cos φ$ (5) $y = f \times tan θ \times sin φ$ (6)

In equations (5) and (6), x denotes a horizontal coordinate and y denotes a vertical coordinate with respect to the reference point O (center of the optical axis) as a center on the image. Further, f denotes a focal length of the optical system 202a, θ denotes an angle (zenith angle) of the object from the optical axis, and φ denotes a horizontal angle of the object from the reference point O. The definitions of parameters illustrated in Fig. 7A are the same as those described in the first embodiment.

Due to the characteristic of the central projection method in which an object appears larger on the image as the zenith angle θ increases, it is difficult for a single image represented by the central projection method to include an object having a large zenith angle θ close to 90°. On the other hand, in the equirectangular projection, which is the coordinate system of the third image, such an object can be included in a single image. Accordingly, the present embodiment generates a third image for each of a plurality of first images, and combines the generated plurality of third images to generate a fifth image, which is one equirectangular image. More specifically, each first image corresponds to a partial region of the fifth image, and as a result, the entire fifth image can be configured. For example, the plurality of first images may be captured by arranging the optical system 202a at different positions or angles. In this case, objects are disposed on the image based on equations in which coordinates and angles in equations (5) and (6) are shifted. Alternatively, the plurality of first images may be captured by arranging a plurality of optical systems including the optical system 202a at different positions or angles. The first image may be represented in grayscale or may have a plurality of channel components. The first image may be a part of an entire captured image. The weight information is read in advance from the memory 201a and stored in the memory 203a.

In step S402, the estimator 203c inputs the first image to the machine learning model to generate a second image. The second image is an image obtained by accurately removing blur from the first image. The second image is represented by a central projection method.

In step S403, the estimator 203c converts the second image into a third image represented by an equirectangular projection, using coordinate transformation. Similarly to the first embodiment, for coordinate transformation, first, a relationship between each pixel of the second image and each pixel of the third image is calculated based on a relationship between the central projection method, which is the coordinate system of the second image, and the equirectangular projection, which is the coordinate system of the third image. That is, a pixel of the second image corresponding to each pixel of the third image is calculated. One or more corresponding pixels of the second image may exist. Here, a shift amount between the center of the second image and the center of the third image to be generated, as well as a shift amount of coordinates and angles relating to capturing of the first image corresponding to the second image, may be considered. Further, a value of R in equations (3) and (4) may be adjusted according to the number of pixels of the third image to be generated. Next, a pixel value of the third image is calculated from pixel values of the second image using an interpolation method such as nearest neighbor interpolation, bilinear interpolation, or bicubic interpolation.

In step S404, the estimator 203c combines the plurality of third images to generate a fifth image. The fifth image is an image represented by an equirectangular projection and is input to the HMD. The fifth image is a single image, and each of the plurality of third images corresponds to a partial region of the fifth image, thereby constituting the entire fifth image. In a partial region of the fifth image, there may be a plurality of corresponding third images. In this case, a pixel value of the region in the fifth image may be calculated using pixel values of the plurality of corresponding third images. For example, the pixel value may be calculated by a simple average or a weighted average of the pixel values of the plurality of corresponding third images. Thereby, boundaries between the plurality of third images become less noticeable in the fifth image, and the third images can be generated with high accuracy.

Next, effects of the present embodiment will be described. When an object in a three-dimensional space is disposed on an image using an equirectangular projection representing the third image, the object is not significantly enlarged in only one of the vertical direction and the horizontal direction in a central portion of the image. On the other hand, in a peripheral portion of the image, the object is significantly enlarged in the horizontal direction. In the central projection method representing the second image, compared with the equirectangular projection, the object is not significantly enlarged in only one of the vertical direction and the horizontal direction. Therefore, in coordinate transformation from the second image represented by the central projection method to the third image represented by the equirectangular projection, particularly a scaling ratio in the horizontal direction varies depending on a position in the image. Thus, when image transformation using a machine learning model is performed after coordinate transformation according to a conventional technique, the third image is likely to be overcorrected or undercorrected in the horizontal direction due to variations in image quality degradation associated with horizontal scaling. On the other hand, the present embodiment can generate the third image with high accuracy regardless of image quality degradation caused by coordinate transformation.

As described above, the configuration according to the present embodiment can generate a third image represented by an equirectangular projection and having high resolution, using coordinate transformation and image transformation using a machine learning model, based on a first image captured using an optical system that employs a central projection method.

### OTHER EMBODIMENTS

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Each embodiment can provide an image processing method that generates, with high accuracy, an image represented in a coordinate system different from that of the original image.

## Claims

1. An image processing method comprising:
generating a second image based on a first image represented in a first coordinate system using a machine learning model; and
converting the second image into a third image represented in a second coordinate system different from the first coordinate system.

2. The image processing method according to claim 1, **characterized in that** each of the first coordinate system and the second coordinate system uses a geometric representation method for specifying a position of an object in a three-dimensional space on an image.

3. The image processing method according to claim 1 or 2, **characterized in that**, in the converting, scaling performed at a first position in the second image is different from scaling performed at a second position in the second image that is different from the first position.

4. The image processing method according to claim 3, **characterized in that**, in the converting, a ratio of a scaling ratio in a predetermined direction at a part of the second image to a scaling ratio in the predetermined direction at another part of the second image has a value of 2 or greater.

5. The image processing method according to any one of claims 1 to 4, **characterized in that**, in the converting, scaling in a first direction performed in at least a part of the second image is different from scaling in a second direction orthogonal to the first direction performed in the at least the part.

6. The image processing method according to any one of claims 1 to 5, **characterized in that**, in the converting, a ratio of a scaling ratio in a first direction of scaling to a scaling ratio in a second direction of scaling orthogonal to the first direction, both performed in at least a part of the second image, has a value of 2 or greater.

7. The image processing method according to any one of claims 1 to 6, **characterized in that** the first image is an image captured using an optical system and an image sensor, or an image obtained based on the captured image.

8. The image processing method according to claim 7, **characterized in that**, in the converting, at least one of correction of distortion, correction of optical axis deviation, and image stabilization based on the first image is performed.

9. The image processing method according to claim 7, **characterized in that** the first image is a stereoscopic image,
wherein the converting includes at least one of correction of parallax in the stereoscopic image, correction of optical axis deviation in a direction perpendicular to a direction of the parallax, and correction of tilt of an object.

10. The image processing method according to any one of claims 1 to 9, **characterized in that** the second image includes a first region and a second region,
wherein the first region is generated using the machine learning model, and
wherein the second region is generated using processing different from the machine learning model.

11. The image processing method according to claim 10, **characterized in that** the first image is a captured image captured using an optical system and an image sensor, or an image obtained based on the captured image,
wherein objects rendered in the first region correspond one-to-one with objects rendered in a third region of the first image, and
wherein the third region is included in an image circle corresponding to the optical system and the image sensor.

12. The image processing method according to claim 10, **characterized in that** objects rendered in the first region correspond one-to-one with objects rendered in the third image.

13. The image processing method according to claim 12, **characterized in that** objects rendered in the first region correspond one-to-one with objects rendered in a fourth region of the first image,
wherein objects rendered in the second region correspond one-to-one with objects rendered in a fifth region of the first image, and
wherein the first region is generated based on the fourth region and at least a part of the fifth region.

14. The image processing method according to any one of claims 1 to 13, further comprising:
decoding first encoded data to generate the first image; and
encoding the third image to generate second encoded data.

15. An image processing apparatus (123) comprising:
a generator (123b) configured to generate a second image based on a first image represented in a first coordinate system using a machine learning model; and
a converter (123b) configured to convert the second image into a third image represented in a second coordinate system different from the first coordinate system.

16. A program that causes a computer to execute the image processing method according to any one of claims 1 to 14.
